(19) **Europäisches Patentamt**

**European Patent Office**

**Office européen des brevets**

(11) Publication number: **0 411 601 B1**

(12) **EUROPEAN PATENT SPECIFICATION**

(45) Date of publication of patent specification: **22.02.95** (51) Int. Cl.⁶: **C08L 23/02**

(21) Application number: **90114751.2**

(22) Date of filing: **01.08.90**

(54) **Thermoplastic barrier articles containing at least two barrier resins.**

(30) Priority: **01.08.89 US 387902**

(43) Date of publication of application:
**06.02.91 Bulletin 91/06**

(45) Publication of the grant of the patent:
**22.02.95 Bulletin 95/08**

(84) Designated Contracting States:
**BE DE FR GB IT NL SE**

(56) References cited:
**EP-A- 0 280 455**
**EP-A- 0 307 684**
**GB-A- 1 391 182**
**US-A- 4 806 597**

(73) Proprietor: **E.I. DU PONT DE NEMOURS AND COMPANY**
**1007 Market Street**
**Wilmington**
**Delaware 19898 (US)**

(72) Inventor: **Mehra, Vinodkumar**
**2203 Regal Drive**
**Wilmington,**
**Delaware 19810 (US)**

(74) Representative: **Abitz, Walter, Dr.-Ing. et al**
**Patentanwälte Abitz & Partner**
**Postfach 86 01 09**
**D-81628 München (DE)**

## Description

Technical Field

This invention relates to certain laminar articles formed from a heterogenous blend of a polyolefin, at least two polymeric barrier materials and an alkylcarboxyl-substituted polyolefin, to processes for making such laminar articles and to compositions of matter useful for making such laminar articles.

Laminar articles of a polyolefin and a condensation polymer are described in U.S. Patent 4,410,482 to Subramanian. In particular, such laminar articles, including fuel tanks for motor vehicles, derived from a polyolefin and polyamide have been found to be useful as containers for liquid hydrocarbons. Recent changes in gasoline technology have led to the addition of oxygenated compounds, such as methanol to hydrocarbon fuels, and the volume of fuels with oxygenated compounds is expected to grow in the future. The loss of a fuel mixture of oxygenated compounds and hydrocarbons by diffusion through the walls of a container with a laminar structure of polyolefin and polyamide has in general been found to be sufficiently great as to be unacceptable from an environmental standpoint.

Similar laminar articles in which the polyamide barrier resin has been replaced with polyvinyl alcohol or ethylene/vinyl alcohol copolymers have been disclosed in European Patent application 0015556, however, these laminar structures have been found to provide an inadequate barrier towards hydrocarbons containing oxygenated compounds.

Thus a need exists for improved containers, such as gas tanks and cans, for the storage of mixtures of hydrocarbons and oxygenated compounds.

Background Art

European Patent Application 0 015 556, published September 17, 1980, discloses laminar articles of polyolefin and a second polymer, incompatible with the polyolefin, using a alkylcarboxyl-substituted polyolefin as a compatibilizing material. Also disclosed are articles prepared from this composition wherein the polyolefin and the second polymer are present as a multitude of thin, substantially two-dimensional, parallel and overlapping layers of material. The second polymer includes polyamides, ethylene vinyl alcohol, polyvinyl alcohol, and others. There is no teaching that both a polyamide and polyvinyl alcohol should be used together, that they should be present together as a melt blend, or that such compositions would exhibit any superior properties toward mixtures of hydrocarbons and oxygenated solvents.

U.S. Patents 4,410,482 and 4,444,817, to Subramanian, issued October 18, 1983 and April 24, 1984, respectively, each claim common priority with the above mentioned European application. The disclosure of each is substantially the same as that of the European application, except that the use of polyvinyl alcohol as the incompatible polymer is not disclosed.

U.S. Patent application Serial No. 07/181,119, filed March 17, 1988 to Mehra discloses laminar articles, with good barrier properties to oxygenated and hydrocarbon compounds, of a polyolefin, a melt blend of a polyamide and a vinyl alcohol based component, and an alkylcarboxyl-substituted polyolefin as a compatibilizer. There is no mention of a physical mixture of two polymeric barrier materials as used in the present invention.

U.S. patent 4,416,942, to DiLuccio, issued November 22, 1983, discloses a lamellar heterogeneous blend of a polyolefin and a condensation polymer incompatible with the polyolefin, as detailed in U.S. 4,410,482, above. The patent discloses laminar articles prepared using this material as one layer.

The following references listed below are all concerned with good barrier properties, however, none of the references disclose the particular physical structure as found in the references mentioned immediately above.

PCT Publication No.WO. 88/02764 published April 21, 1988 discloses compositions comprising polyamides, polyolefin and ethylene vinyl alcohol (EVOH) as the compatibilizer to provide good barrier properties. The present invention uses an alkylcarboxyl-substitute polyolefin as the compatibilizer and could use the EVOH as one of the barrier resins. The present invention achieves excellent barrier for oxygenated hydrocarbons. The PCT publication only shows barrier toward hydrocarbons.

U.S. patents 3,975,463 and 3,857,754, to Hirata et al., issued August 17, 1976 and December 31, 1974, respectively, disclose a composition of 30-98% crystalline polyolefin, 2-70% saponified product of an ethylene-vinyl acetate copolymer having an ethylene content of 25-75 mol % and a degree of saponification of at least 93%, and 0.5 to 15 parts by weight, per 100 parts by weight of said polyolefin and ethylene-vinyl acetate copolymer saponified product, of a thermoplastic polymer containing a carbonyl group in the main or side chain thereof. Again, no mention of a multi-barrier resin composition is disclosed.

2

U.S. Patent 4,611,019, to Lutzman et al., issued September 9, 1986, discloses a composition of polyvinyl alcohol copolymer with 0.5 to 4.5% by weight of a polyamide. The composition has lower permeability to oxygen and other mixed gases.

U.S. Patent 4, 243,724, to Strutzel et al., issued January 6, 1981, discloses a multilayer film having at least one layer of a polymer comprising a linear polyamide containing from 2 to 40 percent by weight of a hydrophilic substance compatible with the polyamide, such as polyvinyl alcohol.

Japanese Patent Application 48-22833, published July 9, 1973, discloses a method for manufacturing a molded polyvinyl alcohol resin wherein 100 parts by weight of a polyvinyl alcohol resin and 2-100 parts by weight of a polyamide resin are mixed and wherein the resulting mixture is heat-melted and molded within a temperature range of 160-280°C.

European Patent Application 0092897, published November 2, 1983, discloses a molecularly oriented films comprising a blend of linear low density polyethylene (LLDP) with ethylene vinyl acetate (EVA) which is bonded next to a barrier layer comprising ethylene vinyl alcohol copolymer and a third layer which can be ethylene vinyl acetate or a blend similar or identical to that forming the layer of LLDP with EVA. This film is coextruded and does not contain a second polymeric material (barrier resin).

Summary of the Invention

Laminar articles, such as containers, having improved barrier properties toward mixtures of oxygenated compounds and hydrocarbons are provided by the present invention.

Specifically, the present invention provides a laminar article comprising a combination of:

(a) a polyolefin;

(b) a physical mixture of at least two polymeric materials selected from the group consisting of polyamides, polyesters, polycarbonates, polyvinyl alcohol, copolymers of vinyl alcohol and melt blends of a polyamide and a vinyl alcohol based component wherein at least one of the polymeric materials is selected from the group consisting of polyamides, polyesters, and polycarbonates; and

(c) an alkylcarboxyl-substituted polyolefin;

wherein the components of the physical mixture (b) are present in the polyolefin (a) as a multitude of thin, substantially two-dimensional, parallel, and overlapping layers. The present invention also provides processes and compositions of matter for making such laminar articles.

Laminar-structured containers prepared according to the present invention lose substantially less oxygenated compound/hydrocarbon mixture than do laminar containers derived from polyolefin, compatibilizer, and only one polymeric barrier material such as polyamide, polyester and polycarbonate.

A further embodiment of the present invention comprises laminates of a first layer of the material having a laminar structure derived from a polyolefin, compatibilizer, and the physical mixture of at least two polymeric materials; and a second layer of a polyolefin comprising 10 to 90 percent of the total thickness of the laminate, said layers being melt bonded together. Preferably the polyolefin in the second layer is the same as that in the first layer.

Detailed Description of the Invention

The polyolefin, (a), used in preparing the laminar shaped articles of the present invention includes polyethylene, polypropylene, polybutylene, related copolymers and the like. Polyethylene is preferred and may be high, medium or low density. High density polyethylene is most preferred. The polyolefin is preferably present in amounts of about 60 to about 98 percent, preferably about 80 to about 97 percent and most preferably about 85-96 percent.

Component (b) is a physical mixture of at least two polymeric materials selected from the group consisting of polyamides, polyesters, polycarbonates, polyvinyl alcohol, copolymers of vinyl alcohol and melt blends of a polyamide and a vinyl alcohol based component, which polymeric materials are hereinafter referred to as barrier resins. The term physical mixture is defined in the following way: the at least two barrier resins are mixed in a suitable container in a salt and pepper fashion without any heating or melting. Each of the above resins are incompatible with the polyolefin. Polyamides include copolyamides and can be semi-crystalline and amorphous polymers. The polyamides used in the present invention include those semi-crystalline and amorphous resins having a molecular weight of a least 5000 and commonly referred to as nylons. Suitable polyamides may include these described in U.S. Patents Numbered 2,071,250; 2,071,251; 2,130,523; 2,130,948; 2,241,322; 2,312,966; 2,512,606; 3,393,210; 4,410,482; and 4,369,305, but are not limited to the above patents. The polyamide can be produced by condensation of equimolar amounts of a saturated dicarboxylic acid containing from 4 to 12 carbon atoms with a diamine containing 4 to 14 carbon atoms. Examples of polyamides include polyhexamethylene adipamide (66 nylon), polyhexamethylene azelamide (69 nylon), polyhexamethylene sebacamide (610 nylon), polyhexamethylene dodecanoamide (612 nylon), poly-11 aminoundecanoic acid, and bis(p-aminocyclohexyl)methane dodecanoamide, and polyamides produced by ring opening of lactams, e.g., polycaprolactam, polylauric lactam. It is also possible in the compositions of the present invention to use polyamides prepared by the copolymerization of two of the above polymers or terpolymerization of three of the above polymers or their components, e.g., an adipic acid, isophthalic acid, hexamethylene diamine copolymer. Polyamides based on hexamethylene diamine, phthalic acid and terephthalic acid are preferred. In addition, the polyamides preferred above may also include bis(p-amino cyclohexyl) methane as described U.S. Patent 4,369,305.

Polyesters are well known and are made by reacting dibasic carboxylic acids with glycols under well-known conditions. Examples of carboxylic acids used in preparation of polyesters are terephthalic acid, isophthalic acid, and the like. Examples of glycols, ethylene glycol, butylene glycol, and other so-called polymethylene glycols having 2 to 10 methylene groups. Exemplary polyesters are polyethylene terephthalate, polybutylene terephthalate, and the like.

Polycarbonates are disclosed in the Handbook of Common Polymers, compiled by W. J. Roff and J. R. Scott, CRC Press, Cleveland, Ohio, U.S.A. (1971).

Polyvinyl alcohol and copolymers of vinyl alcohol such as copolymers of vinyl alcohol containing up to about 10 weight percent of methyl acrylate, methyl methacrylate or other lower alkyl (meth)acrylates or ethylene/vinyl alcohol copolymers containing up to 50 mole percent ethylene, are normally made by polymerizing vinyl acetate alone or copolymerizing it with other monomers followed by saponification to obtain the corresponding polyvinyl alcohol homopolymer or vinyl alcohol copolymer. For use in the present invention the degree of saponification should be greater than 95% and preferably at least 99%. Ironically these polymers have number average molecular weights of about 20,000 to 80,000 but their molecular weight is not critical to this invention. For use in the present invention it may be advantageous to incorporate minor amounts of a plasticizer, compatible with polyvinyl alcohol and copolymers of vinyl alcohol to improve melt processing, other processing aids may also be used.

The vinyl alcohol based component is selected from vinyl alcohol homopolymers, copolymers of vinyl alcohol containing up to about 10 weight percent of methyl acrylate, methyl methacrylate or other lower alkyl (meth)acrylates or ethylene/vinyl alcohol copolymers containing up to 50 mole percent ethylene. The melt blend of a polyamide and a vinyl alcohol based component can contain two or more vinyl alcohol based components. Melt blends of polyamide and polyvinyl alcohol are preferred.

The vinyl alcohol based component is normally made by polymerizing vinyl acetate alone or copolymerizing it with other monomers followed by saponification to obtain the corresponding polyvinyl alcohol homopolymer or vinyl alcohol copolymer. For use in the present invention the degree of saponification should be greater than 95% and preferably at least 99%. Typically these polymers have number average molecular weights of about 20,000 to 80,000 but their molecular weight is not critical to this invention. As mentioned above, it may be advantageous to incorporate minor amounts of a plasticizer compatible with polyvinyl alcohol and copolymers of vinyl alcohol to improve melt processing; other plasticizers may also be used.

The polyamide in the melt blend may include those semi-crystalline and amorphous resins described above. Polycaproamide and a copolyamide of adipic acid, hexamethylene diamine and caprolactam are preferred.

The melt blend, will contain about 10-60 weight percent of polyamide and about 40-90 weight percent of the vinyl alcohol based component. Preferably the melt blend will contain about 15-35 weight percent of polyamide and about 65-85 weight percent of the vinyl alcohol based component; and most preferably the melt blend will contain about 15-30 weight percent of polyamide and about 70-85 weight percent of the vinyl alcohol based component. In preparing the melt blend it may be advantageous to incorporate a minor amount of a plasticizer compatible with the vinyl alcohol based component to improve processing of the blend. Other process aids and antioxidants can be added.

The melt blend is conveniently prepared by mixing a dry blend of polyamide and the vinyl alcohol based component in an extruder at a temperature above the melting point of the higher melting substituent. The material leaving the extruder is preferably stranded, chilled and cut into particles which are particularly useful for preparing the articles of this invention.

Component (b) is present in amounts of about 1-39 weight percent, wherein the polyamides, polyesters and polycarbonates, hereinafter "System I", whichever are present, are present in total amount of about 1-39 weight percent and the polyvinyl alcohol (PVOH), copolymers of vinyl alcohol and melt blends of a polyamide and a vinyl alcohol based component, hereinafter "System II", whichever are present, are present in total amount of about 0-38 weight percent; provided, however, if System II is not present, namely 0 weight percent, then at least 50 weight percent of Component (b), the total barrier resin, is amorphous polyamide. If System II is present then

$$\frac{\text{System II}}{\text{System I}} \geq 0.1$$

preferably this ratio is between 0.1-10.

Component (b) is preferably present in amounts of about 1.5-15 weight percent wherein System I resins, are present in total amount of about 1-10 weight percent and System II resins, are present in total amount of about 0-10 weight percent. Most preferably, Component (b) is present in amounts of about 1.5-10 weight percent wherein System I resins, are present in total amount of about 1-8 weight percent and System II resins are present in total amount of about 0-8 weight percent. In addition, within System I, the polyamide is preferred and within System II the melt blend of polyamide and a vinyl alcohol based component is preferred.

Component (c) is an alkylcarboxyl-substituted polyolefin which serves as a compatibilizer and adheres together adjacent layers of the polyolefin and the barrier resins of the physical mixture. Use of the compatibilizer is important, because in its absence the barrier resin polymer layers making up the laminar article do not adhere well to the polymer matrix and the article does not have useful, mechanical properties. Component (c) is present in amounts of about 0.25 to about 12 weight percent preferably about 1 to about 7 weight percent and most preferably aobut 2 to 5 weight percent.

The alkylcarboxyl-substituted polyolefin compatibilizer is a polyolefin which has carboxylic moieties attached thereto, either on the polyolefin backbone itself or on side chains. By "carboxylic moiety" it is meant carboxylic groups from the group consisting of acids, esters, anhydrides, and salts. Carboxylic salts are neutralized carboxylic acids and a compatibilizer which includes carboxylic salts as a carboxylic moiety also includes the carboxylic acid of that salt. Compatibilizers, which include carboxylic salts, are termed ionomeric polymers.

Compatibilizers can be prepared by direct synthesis or by grafting. An example of direct synthesis is the polymerization of an alpha-olefin with an olefinic monomer having a carboxylic moiety; and an example of grafting is the addition of a monomer having a carboxylic moiety to a polyolefin backbone. In the compatibilizer made by grafting, the polyolefin is polyethylene or a copolymer of ethylene and at least one alpha-olefin of 3-8 carbon atoms such as propylene, and the like, or a copolymer including at least one alpha-olefin of 3-8 carbon atoms and a nonconjugated diolefin, such as 1,4-hexadiene, and the like. The polyolefin is reacted with an unsaturated carboxylic acid, anhydride, or ester monomer to obtain the grafted polymer. Representative acids, anhydrides, and esters include methacrylic acid, acrylic acid, ethacrylic acid, glycidyl methacrylate, 2-hydroxy ethylacrylate, 2-hydroxy ethyl methacrylate, diethyl maleate, monoethyl maleate, di-n-butyl maleate, maleic anhydride, maleic acid, fumaric acid, itaconic acid, monoesters of such dicarboxylic acids, dodecenyl succinic anhydride, 5-norbornene-2,3-anhydride, nadic anhydride (3, 6-endomethylene-1, 2, 3, 6-tetrahydrophthalic anhydride), and the like. Generally, the graft polymer will have from about 0.01 to about 20, preferably about 0.1 to about 10, and most preferably about 0.2 to about 5 weight percent graft monomer. The most preferred graft polymer is a graft of about 0.25 to about 2 weight percent of maleic anhydride moieties onto a polyethylene backbone. Grafted polymers are described in greater detail in U.S. Pat. Nos. 4,026,967 and 3,953,655.

In the compatibilizer made by direct synthesis, the polymeric material is a copolymer of alpha-olefin of 2-10 carbon atoms and an alpha, beta-ethylenically unsaturated carboxylic acid, ester, anhydride, or salt having 1 or 2 carboxylic moieties. The directly synthesized compatibilizer, namely the direct copolymer, is made up of at least 75 mole percent of the olefin component and from about 0.2 to 25 mole percent of the carboxylic component.

Ionomeric compatibilizer is preferably made from directly synthesized compatibilizer and is preferably made up of about 90 to 99 mol percent olefin about 1 to 10 mol percent alpha,beta-ethylenically unsaturated monomer having carboxylic moieties wherein the moieties are considered as acid equivalents and are neutralized with metal ions having valences of 1 to 3, inclusive, where the carboxylic acid equivalent is monocarboxylic, and are neutralized with metal ions having a valence of 1 where the carboxylic acid equivalent is dicarboxylic. To control the degree of neutralization, metal ions are present in an amount sufficient to neutralize at least 10 percent of the carboxyl moieties. Representative alpha-olefins and unsaturated carboxylic acid, anhydride, and ester monomers are those previously herein described. Ionomeric polymers are described in greater detail in U.S. Pat. No. 3,264,272.

In making the laminar articles of this invention the polyolefin which provides the continuous phase of the laminar articles is used in amounts of 60-98 weight percent.

The articles of the present invention are prepared substantially by the process described in U.S. Patent 4,410,482, which is incorporated herein by reference.

In one embodiment, the polymer particles, (Components (a), (b), and (c)) in unmelted form are mixed thoroughly so as to provide a statistically homogeneous distribution. Care must be exercised to avoid substantial additional mixing after the polymers have been heated to a melt. In another embodiment, the polymer particles can be combined in softened or molten form so long as the combination of polymers maintains a heterogeneous character. The melt can also be established by combining molten polyolefin with solid particles of the physical mixture and compatibilizer and then heating the combination. The success of the invention depends on establishing a melted heterogeneous blend of incompatible polymers so that, when the melt is stretched, as by extrusion forces, one polymer (the polyolefin) is in the form of a continuous matrix phase and the other polymers (the barrier resins) are in the form of discontinuous distributed phases. The polymers comprising the discontinuous phases are present as a multitude of thin, substantially two dimensional, parallel and overlapping layers embedded in the continuous phase.

The barrier resins are typically used in particulate form. The particles should, as a general rule, be of a size such that the molten blend of incompatible polymers, when introduced to some melt stretching means, such as extrusion die lips, exhibits the heterogeneity necessary for practice of the invention. When the particles are of too small a size, the melted blend, even though not excessively mixed, tends to function as a homogeneous composition because the domains of material making up the discontinuous polymer phase are so small. When the particles are of too large a size, the melted blend tends to form into shaped articles having a marbleized structure rather than a laminar structure, the large domains of the materials which would make up the discontinuous phase extending to opposite boundaries of the shaped articles and causing disruption of the polyolefin which would make up the continuous phase. Particles about 1 - 5 mm, preferably about 3 mm on a side are found to be particularly well suited. The particles are preferably generally regular in shape, such as cubical or cylindrical or the like. The particles may, however, be irregular; and they may have one dimension substantially greater than another dimension such as would be the case, for example, when flakes of material are used.

When each of the barrier resins are present as individual particles, the particles are generally of approximately the same size although such is not required. The compatibilizer can be provided by itself as individual particles or powder or it can be mixed into, coated onto, or otherwise combined with each of the barrier resins. The polyolefin can be used as particles, granules and powder. One can also make a melt blend of a polyolefin and a compatibilizer.

The thickness of the layers of materials in the discontinuous phase is a function of its particle size and the degree of stretching in the forming step. The particle size of the barrier resins which will become the discontinuous phases in the laminar article is generally selected with a view toward obtaining, after stretching, overlapping layers which can be from about 0.5 to 50 micrometers thick.

Dry mixing particles of polymers can be accomplished by any well-known means such as by means of a V-blender or a tumble mixer or, on a larger scale, by means of a double-cone blender. Continuous mixing of the particles can be accomplished by any of several well-known methods. Of course, the particles can also be mixed by hand, the only requirement of the mixing being that any two statistical samplings of the mixture in a given mass of material should yield substantially the same composition. The mixing of the barrier resins can be accomplished by adding particles of the higher melting polymer to a melt of the lower melting polymer maintained at a temperature below the higher melting point. In that case, the melt is agitated to obtain an adequate mixture; and the mixture is, thus, ready for the heating step.

Once mixed, the barrier resins are heated to a temperature greater than the melting point of the highest melting polymer component. It is noted that the heating is conducted to permit stretching the softened or melted blend. In the case of a barrier resin which exhibits no well-defined melting temperature, "melting temperature" as used here refers to a temperature at least high enough that the polymer has been softened to the the degree required to stretch it during forming. It is important not to heat the mixture substantially above the melting point of the highest melting component to minimize homogenation. That heating results in a softened or melted, heterogeneous blend of materials and the heating must be conducted in a manner which avoids substantial additional mixing of the barrier resins because such mixing could cause homogenization and could result in a melt and a shaped article of substantially uniform, unlayered composition. The heating can be conducted by any of several well-known means and is usually conducted in an extruder. It has been found that a single-screw extruder of the type which is designed for material transport and not material mixing can be used between the heating and forming steps of this invention without causing homogenization of a multi-phase barrier resin composition. Low shear and low mixing extruders of the kind normally used for polyvinyl chloride, acrylonitrile, or polyvinylidene chloride can be used to practice this invention if they are used in a way to melt and transport the materials and minimize mixing of the components. High shear and high mixing extruders of the kind normally used for polyethylene cannot generally be used. However, some of the polyethylene screws could be used by modifying their mixing sections. To the extent that the composition prepared on such extruders retains an aspect of heterogeneity, the advantages of this invention can be realized.

The forming step requires stretching of the melted blend formed by the combination of Components (a), (b) and (c), followed by cooling. Stretching is an elongation of the multi-phase melt to cause a substantial change in the dimensions of the particles in the discontinuous phase. Stretching can be accomplished by any of several means. For example, the melt can be stretched by being squeezed between rollers, pressed between platens, or extruded between die lips. Molding processes such as blow molding also cause stretching in accordance with this process. In the manufacture of laminar articles such as containers, the stretching can be accomplished by a combination of extruding a blend of the heterogeneous melt to yield a container preform or parison followed by blow molding the parison into a finished container.

The stretching can be in a single direction or in perpendicular directions. Whether the stretching is conducted in one direction or two, there should be an elongation of from about 100 to 500 or even 1000 percent or more in at least one direction; an elongation of about 100 to about 300 percent is preferred. While the upper limit set out herein is not critical, the lower limit is critical insofar as inadequate stretching does not yield the improved barriers to fluid permeation which characterize this invention. Avoidance of excessive stretching is important only insofar as excessive elongation of the melt may lead to weakening or rupture of the article.

Stretching is followed by cooling to below the temperature of the melting point of the lowest melting component to solidify the shaped article. The cooling can be conducted by any desired means and at any convenient rate. In the case of stretching by blow molding, the mold is often chilled to cool the article; and, in the case of extruding a film, cooling can be accomplished by exposure to cool air or by contact with a quenching roll.

As previously indicated, a further embodiment comprises laminates of the articles having the laminar structure described hereinbefore with one or two layers of homogeneous polyolefin melt bonded thereto. Examples of such laminates include a laminated film, the first layer of which comprises the laminar-structured material obtained by stretching a melt of the mixture of polyolefin and at least two barrier resins plus compatibilizer bonded to a second layer of pure polyolefin, and a blow molded container having an outer laminar-structured barrier layer obtained from the melt of a mixture of polyolefin and the physical mixture plus compatibilizer bonded to an inner layer of pure polyolefin. The polyolefin which forms the second layer is preferably the same polyolefin used as component (a) in the laminar blend. Under these conditions the layers can be bonded together without the use of an adhesive layer. The preparation of similar laminates which differ in the polymer used to form the discontinuous overlapping barrier layers is described in U.S. Patent 4,416,942.

In another embodiment of the invention, laminated structures can be prepared by coextruding a layer of the heterogenous mixture described above with at least one second layer of polyolefin. The heterogenous mixture is formed in a first extruder as described hereinbefore, while, concurrently, the polyolefin is melt extruded through a second extruder suitable for polyolefins. As the two components are melted in their respective extruders, they are transported from a feed block or containing adaptor into a die where the two components, as coextruded layers, exit the die slot. The combining adaptor is adjusted so that the polyolefin layer comprises 10 to 90 percent, more preferably 50 to 90 percent, of the thickness of the laminate. Containers such as bottles can be produced by coextruding the two or more layers to form a multiple layered parison which can be inflated in a suitable mold to form the desired article.

These laminates exhibit improved fluid barrier properties toward hydrocarbons containing oxygenated solvents compared with those of a single layer of laminar material of the same thickness and having the same amount of the discontinuous phase of the barrier resins. Thus, the laminates maximize the utilization of the barrier resins in heavy walled containers which may be required for demanding applications such as fuel tanks and 55-gallon drugs. At the same time, impact properties of blow molded tanks and drugs are improved because the majority of the wall thickness consists of homogeneous polyethylene.

The blends and laminates of the present invention may be used as containers for hydrocarbon and oxygen-containing liquids, and also may be used to form sheets, films, tubes, pipes, and the like. A particularly contemplated use is for fuel tanks for motor vehicles.

Further embodiments of the present invention are compositions of matter comprising a physical mixture of Components (a), (b) and (c) and a physical mixture of Components (b) and (c), which can be later added to Component (a).

A further composition of matter may also comprise a heteragenous melt blend of the Components (a), (b) and (c). Each of these compositions of matter are suitable for the manufacture of the above mentioned laminar articles.

EXAMPLE 1

In comparative Example 1A, blends were made from particles of polyolefin, polyamide and compatibilizer which were mixed in a polyethylene bag prior to processing. The nylon was a copolyamide prepared by condensing hexamethylenediamine, adipic acid and caprolactam to give a composition containing about 80 weight percent polyhexamethylene adipamide and 20 weight percent polycaproamide. The polyethylene used was linear polyethylene, having a density of 0.953 gram/cubic centimeter, a melt index of 10 gram/10 min as determined according to ASTM D-1238 (condition F).

The compatibilizer was obtained by melt grafting fumaric acid onto polyethylene having a density of 0.958 g/cubic centimeter and melt index of about 10, as determined according to ASTM D-1238. The fumaric acid was grafted onto polyethylene in an amount of about 0.9 weight percent based on total weight of polymer in accordance with the teaching of U.S. Patent 4,026,967.

The following compositions were used:

Copolyamide 3.0 wt %; compatibilizer 3.8 wt %; and polyethylene 93.2 wt %. The mixture was fed to Rocheleau Model 7A continuous extrusion blow molding machine equipped with a 2:1 compression ratio screw (diam. 38.1 mm) without any mixing tip. Bottles with a capacity of approximately 1000 ML were blow molded at a melt temperature of about 230-235°C. The bottles weighed approximately 62 grams. The side walls were about 1 mm thick, and showed laminar distribution of the barrier resin, i.e., the copolyamide.

The effectiveness of the barrier was determined by filling the test containers with 15 volume methanol and 85 volume percent xylene, hereinafter "15methanol/85xylene" and determining the weight loss at 40°C over a period of several weeks. For each solvent mixture triplicates were run. The bottles were weighed periodically and their weight loss was plotted against time and average steady state weight loss was determined for each run. Based on known weight of container and its geometry, the surface area and average thickness were calculated (ASTM-2648). The permeability value was calculated and is presented in Table I.

In Example 1B, a portion of the copolyamide of Comparative Example 1A was replaced with particles of a melt blend of polyamide and polyvinyl alcohol (PVOH). The PVOH used had a number average molecular weight of approximately 30,000 and a 99% degree of saponification. It was washed with methanol to reduce the level of sodium acetate present. After drying, PVOH was blended with 10 wt % of triethylene glycol plasticizer in a twin screw extruder at a melt temperature of about 230°C. The nylon/PVOH blend was then prepared by melt mixing 26.5 parts by weight of the copolyamide used in Example 1A and 73.5 parts of plasticized PVOH composition.

Laminar bottles, indicated in Example 1B were made as in Comparative Example 1A above from 2.5 wt % copolyamide, 0.5 wt % of the nylon/PVOH blend, 3.8 wt % of the compatibilizer and 93.2 wt % of the polyethylene used in Comparative Example 1A.

In Example 1C, a portion of the copolyamide of Comparative Example 1A was replaced with particles of a melt blend of polyamide and polyvinyl alcohol (PVOH), same as used in 1B.

Laminar bottles were made as in Comparative Example 1A above from 2.0 wt % copolyamide, 1.0 wt % of the polyamide/PVOH blend, 3.8% of the compatibilizer and 93.2 wt % of the polyethylene used in Comparative Example 1A.

In Example 1D, which is similar to Example 1B above except that 1.5 wt % copolyamide and 1.5 wt % polyamide/PVOH were used to fabricate laminar bottles.

Barrier effectiveness results of Example 1 for 15methanol/85xylene at 40°C are presented in Table 1 below. It can be seen there is a significant improvement in the effectiveness of barrier of bottles made from semi-crystalline polyamide and polyamide/PVOH blends towards mixtures of hydrocarbons and an oxygenated solvent when compared with laminar bottles made from copolyamide alone.

EP 0 411 601 B1

TABLE I

| EXAMPLE | % SEMI-CRYST. POLYA. | % POLYA/PVOH MELT BLEND | % TOTAL BARRIER RESIN | PERM OF BOTTLES G.MM/DAY.SQ.M |
|---|---|---|---|---|
| 1A (comparative) | 3.0 | - | 3.0 | 37.4 |
| 1B | 2.5 | 0.5 | 3.0 | 35.7 |
| 1C | 2.0 | 1.0 | 3.0 | 24.8 |
| 1D | 1.5 | 1.5 | 3.0 | 22.4 |

EXAMPLE 2

For comparative Example 2A an amorphous polyamide based on 70 mole % isophthalic acid, 30 mole % terephthalic acid and hexamethylene diamine is used instead of the semi-crystalline copolyamide of Comparative Example 1A. Laminar bottles were made from 3 wt % of the amorphous polyamide, 3.6 wt % of the compatibilizer of Comparative Example 1A and 93.4 wt % of the polyethylene used in Comparative Example 1A.

For example 2B, a portion of the amorphous polyamide of Comparative Example 2A is replaced with the particles of the polyamide/PVOH melt blend as described in Example 1B.

Laminar bottles were made from 2 wt % of the amorphous polyamide, 1 wt % of the polyamide/PVOH blend, 3.8 wt % of the compatibilizer used in Comparative Example 1A and 93.2 wt % of the polyethylene used in Comparative Example 1A.

Example 2C, which is similar to Example 2B, except that 15 wt % of CARBOWAX polyethylene glycol 400 (Union Carbide) was used as plasticizer instead of 10 wt % triethylene glycol per Example 1B to make the polyamide/PVOH melt blend.

Laminar bottles were made from 2 wt % amorphous polyamide, 1 wt % of the polyamide/PVOH blend, 3.8 wt % of the compatibilizer used in Comparative Example 1A and 93.2 wt % the polyethylene used in Comparative Example 1A.

The barrier effectiveness results of Example 2 for 15methanol/85xylene at 40°C are presented in Table II. It can be seen there is a significant improvement in the barrier effectiveness of bottles made from amorphous polyamide and polyamide/PVOH melt blend towards mixtures of hydrocarbons and an oxygenated solvent when compared with barrier bottles made from the amorphous polyamide alone.

TABLE II

| EXAMPLE | % AMORP. POLYA. | % POLYA/PVOH MELT BLEND | % TOTAL BARRIER RESIN | PERM OF BOTTLES G.MM/DAY.SQ.M |
|---|---|---|---|---|
| 2A (comparative) | 3.0 | - | 3.0 | 22.4 |
| 2B | 2.0 | 1.0 | 3.0 | 13.8 |
| 2C | 2.0 | 1.0 | 3.0 | 16.5 |

EXAMPLE 3

Comparative Example 3A contains a higher weight % of copolyamide than that which was used in Comparative Example 1A.

Laminar bottles were made from 10.5 wt % of the copolyamide of Comparative Example 1A, 4 wt % of the compatibilizer used in Comparative Example 1A and 85.5 wt % of the polyethylene used in Comparative Example 1A.

For example 3B a portion of the copolyamide of Comparative Example 1A is replaced with particles of the melt blend of polyamide/PVOH of Example 1B.

Laminar bottles were made from 8 wt % copolyamide of Comparative Example 1A, 2.5 wt % of the polyamide/PVOH blend; 4 wt % of the compatibilizer used in Comparative Example 1A and 85.5 wt % of the polyethylene used in Comparative Example 1A.

9

Example 3C is similar to Example 3B except that 5.5 wt % of the copolyamide and 5 wt % of the polyamide/PVOH blend are used to fabricate the bottles.

Example 3D, is similar to Example 3C except that 2.0 wt % copolyamide of Comparative Example 1A, 8.5 wt % of the polyamide/PVOH blend, 4 wt % of the compatibilizer used in Comparative Example 1A and 85.5 wt % of the polyethylene used in Comparative Example 1A.

The barrier effectiveness results of Example 3 for 15methanol/85xylene at 40°C are presented in Table III below. It can be seen there is a significant improvement in the barrier effectiveness of bottles made from semi-crystalline polyamide and polyamide/PVOH melt blends towards mixtures of hydrocarbons and an oxygenated solvent when compared with barrier bottles made from the copolyamide alone for levels of Component (b) at 10.5 weight percent.

TABLE III

| EXAMPLE | % SEMI-CRYST. POLYA. | % POLYA/PVOH MELT BLEND | % TOTAL BARRIER RESIN | PERM OF BOTTLES G.MM/DAY.SQ.M |
|---|---|---|---|---|
| 3A (comparative) | 10.5 | - | 10.5 | 33.0 |
| 3B | 8.0 | 2.5 | 10.5 | 15.7 |
| 3C | 5.5 | 5.0 | 10.5 | 8.3 |
| 3D | 2.0 | 8.5 | 10.5 | 3.9 |

## EXAMPLE 4

Comparative Example 4A contains a higher weight % of the amorphous polyamide than that which is used in Comparative Example 2A.

Laminar bottles were made from 10.5 wt % of the amorphous polyamide, 4.0 wt % of the compatibilizer used in Comparative Example 1A and 85.5 wt % of the polyethylene used in Comparative Example 1A.

For Example 4B a portion of the amorphous polyamide of Comparative Example 2A which is replaced with particles of the melt blend of polyamide/PVOH of Example 1B.

Laminar bottles were made from 8.5 wt % of the amorphous polyamide, 2 wt % of the polyamide/PVOH blend, 2.0 wt % of the compatibilizer used in Comparative Example 1A and 85.5 wt % of the polyethylene used in Comparative Example 1A.

Example 4C is similar to Example 4B, except that 6 wt % of the amorphous polyamide and 4.5 wt % of the polyamide/PVOH blend ware used to fabricate the bottles.

The barrier effectiveness results of Example 4 for 15methanol/85xylene at 40°C are presented in Table IV below. It can be seen there is a significant improvement in the barrier effectiveness of bottles made from amorphous polyamide and nylon/PVOH melt blend towards mixtures of hydrocarbons and an oxygenated solvent when compared with laminar bottles made from the amorphous polyamide alone at higher levels of the total barrier resins.

TABLE IV

| EXAMPLE | % AMORP. POLYA. | % POLYA/PVOH MELT BLEND | % TOTAL BARRIER RESIN | PERM OF BOTTLES G.MM/DAY.SQ.M |
|---|---|---|---|---|
| 4A (comparative) | 10.5 | - | 10.5 | 18.5 |
| 4B | 8.5 | 2.0 | 10.5 | 6.3 |
| 4C | 6.0 | 4.5 | 10.5 | 5.1 |

## EXAMPLE 5

Comparative Example 5A contain a lower weight % of copolyamide than that which is used in Comparative Example 1A.

Laminar bottles were made from 2.25 wt % of the copolyamide, 3.1 wt % of the compatibilizer used in Comparative Example 1A and 94.65 wt % of the polyethylene used in Comparative Example 1A.

For example 5B a portion of the copolyamide of Comparative Example 1A was replaced with particles of the melt blend of polyamide/PVOH of Example 1B.

Laminar bottles were made from 2.0 wt % copolyamide used in Comparative Example 1A, 0.25 wt % of the polyamide/PVOH blend, 3.1 wt % of the compatibilizer used in Comparative Example 1A and 94.65 wt % of the polyethylene used in Comparative Example 1A.

The barrier effectiveness results of Example 5 for 15methanol/85xylene at 40°C are presented in Table V below. It can be seen there is a significant improvement in the barrier effectiveness towards mixtures of hydrocarbons and an oxygenated solvent when compared with barrier bottles made from the copolyamide alone of the lower levels of the total barrier resins.

TABLE V

| EXAMPLE | % SEMI-CRYST. POLYA. | % POLYA/PVOH MELT BLEND | % TOTAL BARRIER RESIN | PERM OF BOTTLES G.MM/DAY.SQ.M |
|---|---|---|---|---|
| 5A (comparative) | 2.25 | - | 2.25 | 42.4 |
| 5B | 2.0 | 0.25 | 2.25 | 31.8 |

## EXAMPLE 6

Comparative Example 6A contains a lower weight % of the amorphous polyamide than that which is used in Comparative Example 2A.

Laminar bottles were made from 2.25 wt % of the amorphous polyamide, 3.1 wt % of the compatibilizer used in Comparative Example 1A and 94.65 wt % of the polyethylene used in Comparative Example 1A.

For example 6B a portion of the amorphous polyamide of Comparative Example 2A was replaced with particles of the melt blend of polyamide/PVOH of Comparative Example 1B.

Laminar bottles were made from 2.0 wt % of the amorphous polyamide, 0.25 wt % of the polyamide/PVOH blend, 3.1 wt % of the compatibilizer used in Comparative Example 1A and 94.65 wt % of the polyethylene used in Comparative Example 1A.

The barrier effectiveness results of Example 6 for 15methanol/85xylene at 40°C are presented in Table VI below. It can be seen there is a significant improvement in the barrier of bottles made from effectiveness of the amorphous polyamide and the polyamide/PVOH melt blend towards mixtures of hydrocarbons and an oxygenated solvent when compared with laminar bottles made from the amorphous polyamide alone.

TABLE VI

| EXAMPLE | % AMORP. POLYA. | % POLYA/PVOH MELT BLEND | % TOTAL BARRIER RESIN | PERM OF BOTTLES G.MM/DAY.SQ.M |
|---|---|---|---|---|
| 6A (comparative) | 2.25 | - | 2.25 | 24.8 |
| 6B | 2.0 | 0.25 | 2.25 | 23.2 |

## EXAMPLE 7

For Example 7, a comparison to Comparative Example 1A is used. Example 7A is particles of two different polyamides eg. semi-crystalline copolyamide of Comparative Example 1A and amorphous polyamide of Comparative Example 2A. Laminar bottles were made from 1.9 wt % copolyamide, 1.1 wt % amorphous polyamide, 3.8% compatibilizer of Comparative Example 1A and 93.2% of polyethylene used in Comparative Example 1A.

In Example 7B, which is similar to Example 7A, except that 1 wt % of the copolyamide and 2 wt % of the amorphous polyamide is used to fabricate bottles.

The barrier effectiveness results of Example 7 for 15methanol/85xylene at 40°C are presented in Table VII below and compared with Comparative Example 1A of Table I. It can be seen there is a significant improvement in the barrier effectiveness of bottles made from semi-crystalline and amorphous polyamides towards mixtures of hydrocarbons and an oxygenated solvent when compared with laminar bottles made from semi-crystalline polyamide alone.

TABLE VII

| EXAMPLE | % SEMI-CRYST. POLYA. | % AMORP. POLYA. | % TOTAL BARRIER RESIN | PERM OF BOTTLES G.MM/DAY.SQ.M |
|---|---|---|---|---|
| 1A (comparative) | 3.0 | - | 3.0 | 37.4 |
| 7A | 1.9 | 1.1 | 3.0 | 22.4 |
| 7B | 1.0 | 2.0 | 3.0 | 30.7 |

EXAMPLE 8

For Example 8, a comparison to Comparative Example 3A is used. Example 8A contains particles of two different polyamides eg. semi-crystalline copolyamide of Comparative Example 1A and amorphous polyamide of Comparative Example 2A. This example is similar to Example 7 except that a higher level of the barrier resin is used. Laminar bottles were made from 2 wt % copolyamide, 8.5 wt % amorphous polyamides, 4 wt % compatibilizer of Comparative Example 1A and 85.5 wt % of polyethylene used in Comparative Example 1A.

Example 8B is similar to Example 8A, except that 5 wt % of the copolyamide and 5.5 wt % of the amorphous polyamide were used to fabricate bottles.

The barrier effectiveness results of Example 8 for 15methanol/85xylene at 40°C are presented in Table VIII below and compared with Example 3A of Table III. It can be seen there is a significant improvement in the barrier effectiveness of bottles made from semi-crystalline and amorphous polyamides towards mixtures of hydrocarbons and an oxygenated solvent when compared with laminar bottles made from semi-crystalline polyamide alone.

TABLE VIII

| EXAMPLE | % SEMI-CRYST. POLYA. | % AMORPHOUS POLYAMIDE | % TOTAL BARRIER RESIN | PERM OF BOTTLES G.MM/DAY.SQ.M |
|---|---|---|---|---|
| 3A (comparative) | 10.5 | - | 10.5 | 32.2 |
| 8A | 2.0 | 8.5 | 10.5 | 10.2 |
| 8B | 5.0 | 5.5 | 10.5 | 22.0 |

EXAMPLE 9

For Example 9, a comparison to Comparative Example 1A is used. Example 9 contains particles of the two different polyamides of Example 7 and the polyamide/PVOH blend of Example 1B. Laminar bottles were made from 1.1 wt % copolyamide of Comparative Example 1A; 1 wt % of amorphous polyamide, 1 wt % of polyamide/PVOH, 3.8% of the compatibilizer of Comparative Example 1A and 93.1 wt % of the polyethylene used in Comparative Example 1A.

The barrier effectiveness results of Example 9 for 15methanol/85xylene at 40'C are presented in Table IX below and are compared with Comparative Example 1A. The permeability value has been extrapolated for 3.0 wt % to 3.1 wt % of the copolyamide. It can be seen there is a significant improvement in the barrier effectiveness of bottles made from of up to three different barrier reins towards mixtures of hydrocarbons and an oxygenated solvent when compared with laminar bottles made from only one barrier resin, namely the semi-crystalline polyamide.

TABLE IX

| EXAMPLE | % SEMI-CRYST. POLYA. | % AMORPHOUS POLYAMIDE | % POLYA/PVOH MELT BLEND | % TOTAL BARRIER RESIN | PERM OF BOTTLES G.MM/DAY.SQ.M |
|---|---|---|---|---|---|
| 1A (comparative) | 3.1 | - | - | 3.1 | 36.5 |
| 9 | 1.1 | 1.0 | 1.0 | 3.1 | 18.0 |

## EXAMPLE 10

For Example 10, a comparison to Comparative Example 3A is used. For Example 10 contains particles of two different polyamides of Example 7 and the polyamide/PVOH blend of Example 1B. Laminar bottles were made from 3.5 wt % copolyamide, 3.5 wt % amorphous polyamide, 3.5 wt % polyamide/PVOH blend, 4 wt % compatibilizer of Comparative Example 1A and 85.5 wt % of the polyethylene used in Comparative Example 1A.

The barrier effectiveness results of Example 10 for 15methanol/85xylene at 40'C are presented in Table X below and are compared with Comparative Example 3A. It can be seen, there is a significant improvement in barrier effectiveness with bottles made from three different barrier resins towards mixtures of hydrocarbons and an oxygenated solvent when compared with laminar bottles made from semi crystalline polyamide alone.

TABLE X

| EXAMPLE | % SEMI-CRYST. POLYA. | % AMORPHOUS POLYAMIDE | % POLYA/PVOH MELT BLEND | % TOTAL BARRIER RESIN | PERM OF BOTTLES G.MM/DAY.SQ.M |
|---|---|---|---|---|---|
| 3A (comparative) | 10.5 | - | - | 10.5 | 33.0 |
| 10 | 3.5 | 3.5 | 3.5 | 10.5 | 9.8 |

## EXAMPLE 11

Example 11 is similar to Example 3C except that the plasticized PVOH (described in Example 1B) is used instead of the PVOH/polyamide blend.

Laminar bottles were made from 5.5 wt % of the copolyamide, 5 wt % of the plasticized PVOH, 4 wt % of the compatibilizer and 85.5 wt % of polyethylene.

The barrier effectiveness results of Example 11 for 15methanol/85xylene at 40'C are presented in Table XI below are compared with Example 3A. There is a significant improvement in the barrier effectiveness of bottles made from copolyamide and PVOH towards mixtures of hydrocarbon and oxygenated solvent when compared with barrier bottles made from the copolyamide alone.

TABLE XI

| EXAMPLE | % SEMI-CRYST. POLYA. | % PVOH | % TOTAL BARRIER RESIN | PERM OF BOTTLES G.MM/DAY.SQ.M |
|---|---|---|---|---|
| 3A (comparative) | 10.5 | - | 10.5 | 33.0 |
| 11 | 5.5 | 5.0 | 10.5 | 9.0 |

## EXAMPLE 12

Example 12 is similar to Example 11 except that ethylene-vinyl alcohol (EVOH) was used instead of the polyvinyl alcohol.

Laminar bottles were made 5.5 wt % of the copolyamide, 5 wt % of the EVOH ("Selar" OH 3003, Du Pont Co, copolymer containing 30 mole percent ethylene and a Melt Index of 3 gs/10 min at 210′C with a 2160 gram weight), 4 wt % of the compatibilizer and 85.5 wt % of polyethylene.

The barrier effectiveness results of Example 12 for 15methanol/85xylene at 40′C are presented in Table XII below and are compared with Example 3A. It can be seen, there is a significant improvement in the barrier effectiveness of bottle made from copolyamide and EVOH towards mixtures of hydrocarbon and oxygenated solvent when compared with barrier bottles made from the copolyamide alone.

TABLE XII

| EXAMPLE | % SEMI-CRYST. POLYA. | % EVOH | % TOTAL BARRIER RESIN | PERM OF BOTTLES G.MM/DAY.SQ.M |
|---|---|---|---|---|
| 3A (comparative) | 10.5 | - | 10.5 | 33.0 |
| 12 | 5.5 | 5.0 | 10.5 | 23.6 |

EXAMPLE 13

Example 13 is similar to Example 4C except that plasticized PVOH (described in Example 1B) is used instead of the PVOH/polyamide blend.

Laminar bottles were made from 5.5 wt % of the amorphous polyamide, 5 wt % of the plasticized PVOH, 4 wt % of the compatibilizer and 85.5 wt % of the polyethylene.

The barrier effectiveness results of Example 13 for 15methanol/85xylene at 40′C are presented in Table XIII below and compared with Example 4A. There is a significant improvement in the barrier effectiveness of bottles made from amorphous polyamide and PVOH towards mixtures of hydrocarbon and oxygenated solvent when compared with barrier bottles made from the amorphous polyamide alone.

TABLE XIII

| EXAMPLE | % AMORP. POLYA. | % PVOH | % TOTAL BARRIER RESIN | PERM OF BOTTLES G.MM/DAY.SQ.M |
|---|---|---|---|---|
| 4A (comparative) | 10.5 | - | 10.5 | 18.5 |
| 13 | 5.5 | 5.0 | 10.5 | 5.9 |

EXAMPLE 14

Example 14 is similar to Example 13 except that ethylene vinyl alcohol (EVOH) was used instead of the polyvinyl alcohol.

Laminar bottles were made from 5.5 wt % of amorphous polyamide, 5 wt % of the EVOH ("Selar" OH 3003 DuPont Co.), 4 wt % of the compatabilizer and 85.5 wt % of polyethylene.

The barrier effectiveness results of Example 14 for 15methanol/85xylene at 40′C are presented in Table XIV below and are compared with Example 4A. There is a significant improvement in the barrier effectiveness of bottles made from EVOH and amorphous polyamide towards mixtures of hydrocarbon and oxygenated solvent when compared with barrier bottles made from the amorphous polyamide alone.

TABLE XIV

| EXAMPLE | % AMORP. POLYA. | % EVOH | % TOTAL BARRIER RESIN | PERM OF BOTTLES G.MM/DAY.SQ.M |
|---|---|---|---|---|
| 4A (comparative) | 10.5 | - | 10.5 | 18.5 |
| 14 | 5.5 | 5.0 | 10.5 | 14.9 |

14

EXAMPLE 15

Example 15A comprises particles of semi-crystalline polyamide (copolyamide), PVOH and EVOH. Laminar bottles were made from 3.5 wt % of the copolyamide, 3.5 wt % of plasticized PVOH, 3.5 wt % of EVOH, 4 wt % of the compatibilizer and 85.5 wt % of polyethylene.

Example 15B comprising particles of two different polyamides and plasticized PVOH. Laminar bottles were made from 3.5 wt % of copolyamide, 3.5 wt % of amorphous polyamide, 3.5 wt % of plasticized PVOH, 4 wt % of the compatibilizer and 85.5 wt % of polyethylene.

The barrier effectiveness results of Example 15 for 15methanol/85xylene at 40'C are presented in Table XV below and are compared with Example 3A. Thus, there is a significant improvement in the barrier effectiveness of bottles made from semi-crystalline polyamide, amorphous polyamide, PVOH and EVOH towards mixtures of hydrocarbon and oxygenated solvent containing bottles made when compared with barrier bottles made from the copolyamide alone.

TABLE XV

| EXAMPLE | % SEMI-CRYST. POLYA. | % AMORPHOUS POLYAMIDE | % PVOH | % EVOH | % TOTAL BARRIER RESIN | PERM OF BOTTLES G.MM/DAY.SQ.M |
|---|---|---|---|---|---|---|
| 3A (comparative) | 10.5 | - | - | - | 10.5 | 33.0 |
| 15A | 3.5 | - | 3.5 | 3.5 | 10.5 | 15.7 |
| 15B | 3.5 | 3.5 | 3.5 | - | 10.5 | 13.8 |

**Claims**

1.  A laminar article comprising a combination of:
    (a) a polyolefin;
    (b) a physical mixture of at least two polymeric materials selected from the group consisting of polyamides, polyesters, polycarbonates, polyvinyl alcohol, copolymers of vinyl alcohol and melt blends of a polyamide and a vinyl alcohol based component wherein at least one of the polymeric materials is selected from the group consisting of polyamides, polyesters and polycarbonates; and
    (c) an alkylcarboxyl-substituted polyolefin;
    wherein the mixture (b) is present in the polyolefin (a) as multitude of thin, substantially two-dimensional, parallel, and overlapping layers and further wherein the alkylcarboxyl-substituted polyolefin is at least partially present at the interfaces of the layers of mixture (b) and the polyolefin (a).

2.  The article of Claim 1 wherein the polyolefin (a) is present in the amount of about 60 to about 98 weight percent, the mixture (b) is present in the amount of about 1 to about 39 weight percent wherein the polyamide, polyesters and polycarbonates, whichever are present, are present in total amount of about 1-39 weight percent and the polyvinyl alcohol, copolymers of vinyl alcohol and the melt blends, whichever are present, are present in total amount of about 0-38 weight percent; provided if the polyvinyl alcohol, copolymers of vinyl alcohol and the melt blends are 0 weight percent, at least 50 weight percent of the total physical mixture is amorphous polyamide; and provided if polyvinyl alcohol, copolymers of vinyl alcohol or the melt blends are present then:

$$\frac{\text{System II}}{\text{System I}} \geq 0.1$$

where System I = polyamides, polyesters and polycarbonates, System II = polyvinyl alcohol, copolymers of vinyl alcohol and melt blends, and the alkylcarboxyl-substituted polyolefin (c) is present in the amount of about 0.25 to about 12 weight percent.

3.  The article of Claim 2 wherein the polyolefin is polyethylene, preferably high density polyethylene.

4. The article or Claim 2 wherein the degree of saponification of the polyvinyl alcohol is at least about 95 percent, preferably at least about 99 percent.

5. The article of Claim 2 wherein the vinyl alcohol based component comprises about 50 to about 100 percent by weight of a polymer selected from the group consisting of (i) polyvinyl alcohol, (ii) saponified copolymers of vinyl acetate containing up to about 10 percent by weight of lower alkyl acrylate or lower alkyl methacrylate, and (iii) mixtures thereof,and about 0 to about 50 percent by weight of an ethylene-vinyl alcohol copolymer containing up to about 50 weight percent of ethylene.

6. The article of Claim 5 wherein the degree of saponification of the vinyl alcohol based component is at least about 95 percent, preferably at least about 99 percent.

7. The article of Claim 6 wherein the vinyl alcohol based component is polyvinyl alcohol.

8. The article of Claim 2 wherein the System I is polyamide, preferably amorphous polyamide, more preferably polyamides that are copolymers of hexamethylene diamine, phthalic acid and terephthalic acid and especially such copolymers also including bis(p-amino cyclohexyl) methane.

9. The article of Claim 2 wherein the polyamide in the melt blend is selected from the group consisting of polycaproamide and copolymers of adipic acid, hexamethylene diamine, and caprolactam, said copolymers being preferred.

10. The article of Claim 2 wherein the vinyl alcohol based component is polyvinyl alcohol.

11. The article of Claim 2 wherein the polyolefin (a) is present at about 80 to about 97 weight percent, preferably at about 85 to about 96 weight percent, the physical mixture (b) is present at about 1.5 to about 15 weight percent, preferably at about 1.5 to about 10 weight percent, wherein the System I is present in total amount of about 1-10 weight percent, preferably of about 1-8 weight percent, the System II is present in total amount of about 0-10 weight percent, preferably of about 0-8 weight percent, and the

$$\underline{System\ II}$$

$$System\ I$$

is between about 0.1-10 and the alkylcarboxyl-substituted polyolefin (c) is present at about 1 to about 7 weight percent, preferably at about 2 to about 5 weight percent.

12. The article of Claim 2 wherein the alkylcarboxyl-substituted polyolefin is a direct copolymer, preferably a copolymer of an alpha olefin of 2-10 carbon atoms and about 0.25 to about 25 mole percent of an alpha, beta-ethylenically unsaturated carboxylic acid, ester, anhydride, or salt having 1 or 2 carboxylic moieties, especially preferred a copolymer of ethylene and methacrylic acid, which in a preferred manner contains about 1 to about 10 mole percent methacrylic acid, neutralized to about 90 percent with at least one metal ion of valence from 1 to 3.

13. The article of Claim 2 wherein the alkylcarboxyl-substituted polyolefin is a graft copolymer, preferably a graft of about 0.25 to about 2.0 weight percent maleic anhydride moieties on a polyethylene backbone.

14. The article of Claim 11, wherein:
    (a) the polyolefin is polyethylene;
    (b) the physical mixture comprises about 1-10 weight percent semi-crystalline polyamide and 0.5-10 weight percent of the melt blend of a polyamide and a vinyl alcohol based component; and
    (c) the alkylcarboxyl-substituted polyolefin is present at about 1 to about 7 weight percent and is a graft copolymer of about 0.25 to about 2.0 weight percent maleic anhydride moieties on a polyethylene backbone.

16

EP 0 411 601 B1

**15.** The article of Claim 14 wherein the semi-crystalline polyamide and the polyamide in the melt blend is a copolyamide of adipic acid, hexamethylene diamine and caprolactam and the vinyl alcohol based component is polyvinyl alcohol.

**16.** The article of Claim 11 wherein:
(a) the polyolefin is polyethylene;
(b) the physical mixture comprise 1-10 weight percent amorphous polyamide and 0.5-10 weight percent of the melt blend of a polyamide and a vinyl alcohol based component; and (c) the alkylcarboxyl-substituted polyolefin is present at about 2-5 weight percent.

**17.** The article of Claim 16 wherein the amorphous polyamide is a copolymer of hexamethylene diamine, phthalic acid and terephtalic acid, the polyamide in the melt blend is a copolyamide of adipic acid, hexamethylene diamine and caprolactam and the vinyl alcohol based component is polyvinyl alcohol.

**18.** The article of Claim 16 wherein the amorphous polyamide is a copolymer of hexamethylene diamine, phthalic acid, terephthalic acid and bis(p-amino cyclohexyl) methane.

**19.** A process for preparing a laminated article comprising the steps of:
(a) preparing a physical mixture of at least two polymeric materials selected from the group consisting of polyamides, polyesters, polycarbonates, polyvinyl alcohol and copolymers of vinyl alcohol and melt blends of a polyamide and a vinyl alcohol based component;
(b) combining the physical mixture with a polyolefin and an alkylcarboxyl-substituted polyolefin at a sufficient temperature to melt all the components, thereby forming a melted heterogeneous mixture;
(c) forming the melted heterogeneous mixture by (i) stretching a body of the mixture and (ii) cooling the stretched body to below the melting point of the lowest melting polymer component to form a multitude of thin, substantially two-dimensional, parallel and overlapping layers.

**20.** The process of Claim 19 wherein the polymeric materials of the physical mixture are combined with the polyolefin and alkylcarboxyl-substituted polyolefin, followed by heating to form a melted heterogeneous mixture.

**21.** The process of Claim 19 wherein particles of the physical mixture and particles of the polyolefin have dimensions of about 1 to about 5 mm.

**22.** The process of Claim 20 wherein the stretching results in an elongation of the body of the mixture of at least about 100 percent in at least one direction.

**23.** The laminar article of Claim 2 in the form of a container, which is preferably a fuel tank for motor vehicles.

**24.** A laminated structure comprising at least one first layer of the laminar article of Claim 2 and at least one second layer of a polyolefin.

**25.** The laminated structure of Claim 24 wherein the polyolefin of the second layer is the same as the polyolefin in the first layer and is preferably polyethylene.

**26.** The laminated structure of Claim 25 wherein the form of a container, which is preferably a fuel tank for motor vehicles.

**27.** A laminated structure comprising at least one first layer of the laminar article of Claim 12 and at least one second layer of a polyolefin.

**28.** A composition of matter suitable for use together with a polyolefin in the manufacture of the laminar article of Claim 1, said composition comprising a physical mixture of an alkylcarboxyl-substituted polyolefin and at least two polymeric materials selected from the group consisting of polyamides, polyesters and polycarbonates, polyvinyl alcohol and melt blends of a polyamide and a vinyl alcohol based component wherein at least one of the polymeric materials is selected from the group consisting of polyamides, polyesters and polycarbonates.

17

**29.** A composition of matter suitable for use in the manufacture of the laminar article of Claim 1, said composition comprising a physical mixture of a polyolefin, an alkylcarboxyl - substituted polyolefin and at least two polymeric materials selected from the group consisting of polyamides, polyesters and polycarbonates, polyvinyl alcohol and melt blends of a polyamide and a vinyl alcohol based component wherein at least one of the polymeric materials is selected from the group consisting of polyamides, polyesters and polycarbonates.

**30.** A composition of matter comprising a heterogenous melt blend of the composition of Claim 29.

**Patentansprüche**

**1.** Schichtenförmiger Gegenstand, umfassend eine Kombination von:
(a) einem Polyolefin;
(b) einer physikalischen Mischung aus wenigstens zwei polymeren Materialien, ausgewählt aus der Gruppe bestehend aus Polyamiden, Polyestern, Polycarbonaten, Polyvinylalkohol, Copolymeren von Vinylalkohol und Schmelzmischungen eines Polyamids und einer auf einem Vinylalkohol basierenden Komponente, wobei wenigstens eines der polymeren Materialien ausgewählt ist aus der Gruppe bestehend aus Polyamiden, Polyestern und Polycarbonaten; und
(c) einem alkylcarboxyl-substituierten Polyolefin;
wobei die Mischung (b) in dem Polyolefin (a) in Form einer Vielzahl von dünnen, im wesentlichen zweidimensionalen, parallelen und überlappenden Schichten vorliegt, und wobei weiterhin das alkylcarboxyl-substituierte Polyolefin wenigstens teilweise an den Grenzflächen der Schichten von Mischung (b) und dem Polyolefin (a) vorhanden ist.

**2.** Gegenstand nach Anspruch 1, bei welchem das Polyolefin (a) in einer Menge von etwa 60 bis etwa 98 Gew.-% vorliegt, die Mischung (b) in einer Menge von etwa 1 bis etwa 39 Gew.-% vorhanden ist, wobei das Polyamid, die Polyester und die Polycarbonate, welche auch immer anwesend sind, in einer Gesamtmenge von etwa 1 - 39 Gew.-% vorliegen, und der Polyvinylalkohol, die Copolymeren von Vinylalkohol und die Schmelzmischungen, welche auch immer anwesend sind, in einer Gesamtmenge von 0 - 38 Gew.-% vorliegen; mit der Maßgabe, daß wenigstens 50 Gew.-% der gesamten physikalischen Mischung amorphes Polyamid ist, sofern der Polyvinylalkohol, die Copolymeren von Vinylalkohol und die Schmelzmischungen 0 Gew.-% bilden; und mit der Maßgabe, daß bei Anwesenheit von Polyvinylalkohol, Copolymeren von Vinylalkohol oder den Schmelzmischungen gilt:

$$\frac{\text{System II}}{\text{System I}} \geq 0,1$$

worin System I = Polyamide, Polyester und Polycarbonate, System II = Polyvinylalkohol, Copolymere von Vinylalkohol und Schmelzmischungen, und wobei das alkylcarboxyl-substituierte Polyolefin (c) in einer Menge von etwa 0,25 bis etwa 12 Gew.-% anwesend ist.

**3.** Gegenstand nach Anspruch 2, bei welchem das Polyolefin Polyethylen, vorzugsweise Polyethylen hoher Dichte, ist.

**4.** Gegenstand nach Anspruch 2, bei welchem der Verseifungsgrad des Polyvinylalkohols wenigstens etwa 95%, vorzugsweise wenigstens etwa 99%, beträgt.

**5.** Gegenstand nach Anspruch 2, bei welchem die auf Vinylalkohol basierende Komponente etwa 50 bis etwa 100 Gew.-% eines Polymeren umfaßt, ausgewählt aus der Gruppe bestehend aus (i) Polyvinylalkohol, (ii) verseiften Copolymeren von Vinylacetat, die bis zu etwa 10 Gew.-% niederes Alkylacrylat oder niederes Alkylmethacrylat enthalten, und (iii) Mischungen von diesen, und etwa 0 bis etwa 50 Gew.-% eines Ethylen/Vinylalkohol-Copolymeren, welches bis zu etwa 50 Gew.-% Ethylen enthält.

**6.** Gegenstand nach Anspruch 5, bei welchem der Verseifungsgrad der auf Vinylalkohol basierenden Komponente wenigstens etwa 95%, vorzugsweise wenigstens etwa 99%, beträgt.

7. Gegenstand nach Anspruch 6, bei welchem die Komponente auf Vinylalkoholbasis Polyvinylalkohol ist.

8. Gegenstand nach Anspruch 2, bei welchem das System I Polyamid ist, vorzugsweise amorphes Polyamid, in noch bevorzugterer Weise Polyamide, die Copolymere von Hexamethylendiamin, Phthalsäure und Terephthalsäure sind, und insbesondere solche Copolymere, die auch bis(p-Aminocyclohexyl)methan umfassen.

9. Gegenstand nach Anspruch 2, bei welchem das Polyamid in der Schmelzmischung ausgewählt ist aus der Gruppe bestehend aus Polycaproamid und Copolymeren von Adipinsäure, Hexamethylendiamin und Caprolactam, wobei die genannten Copolymeren bevorzugt sind.

10. Gegenstand nach Anspruch 2, bei welchem die Komponenten auf Vinylalkoholbasis Polyvinylalkohol ist.

11. Gegenstand nach Anspruch 2, bei welchem das Polyolefin (a) zu etwa 80 bis etwa 97 Gew.-%, vorzugsweise zu etwa 85 bis etwa 96 Gew.-%, vorliegt, die physikalische Mischung (b) zu etwa 1,5 bis etwa 15 Gew.-%, vorzugsweise zu etwa 1,5 bis etwa 10 Gew.-%, anwesend ist, wobei das System I in einer Gesamtmenge von etwa 1 bis 10 Gew.-%, vorzugsweise etwa 1 bis 8 Gew.-% vorliegt, das System II in einer Gesamtmenge von etwa 0 bis 10 Gew.-%, vorzugsweise von etwa 0 bis 8 Gew.-%, vorliegt, und

$$\frac{\text{System II}}{\text{System I}}$$

zwischen etwa 0,1 bis 10 beträgt und das alkylcarboxyl-substituierte Polyolefin (c) zu etwa 1 bis etwa 7 Gew.-%, vorzugsweise zu etwa 2 bis etwa 5 Gew.-%, vorliegt.

12. Gegenstand nach Anspruch 2, bei welchem das alkylcarboxyl-substituierte Polyolefin ein direktes Copolymeres ist, vorzugsweise ein Copolymeres eines alpha-Olefin mit 2 - 10 Kohlenstoffatomen und etwa 0,25 bis etwa 25 Molprozent einer alpha, beta-ethylenisch ungesättigten Carbonsäure, -ester, -anhydrid oder -salz mit 1 oder 2 Carboxylgruppen, und besonders bevorzugt ein Copolymeres von Ethylen und Methacrylsäure, welches in einer bevorzugten Weise etwa 1 bis etwa 10 Molprozent Methacrylsäure enthält, welche zu etwa 90% mit wenigstens einem Metallion einer Valenz von 1 bis 3 neutralisiert ist.

13. Gegenstand nach Anspruch 2, bei welchem das alkylcarboxyl-substituierte Polyolefin ein Pfropfcopolymeres ist, vorzugsweise eine Pfropfung von etwa 0,25 bis etwa 2,0 Gew.-% Maleinsäureanhydrideinheiten auf einem Polyethylengrundgerüst.

14. Gegenstand nach Anspruch 11, bei welchem:
    (a) das Polyolefin Polyethylen ist;
    (b) die physikalische Mischung etwa 1 - 10 Gew.-% halbkristallines Polyamid und 0,5 - 10 Gew.-% der Schmelzmischung eines Polyamids und einer Komponente auf Vinylalkoholbasis umfaßt; und
    (c) das alkylcarboxyl-substituierte Polyolefin zu etwa 1 bis etwa 7 Gew.-% vorliegt und ein Pfropfcopolymeres von etwa 0,25 bis etwa 2,0 Gew.-% Maleinsäureanhydrideinheiten auf einem Polyethylengrundgerüst ist.

15. Gegenstand nach Anspruch 14, bei welchem das halbkristalline Polyamid und das Polyamid in der Schmelzmischung ein Copolyamid von Adipinsäure, Hexamethylendiamin und Caprolactam ist und die Komponente auf Vinylalkoholbasis Polyvinylalkohol ist.

16. Gegenstand nach Anspruch 11, bei welchem:
    (a) das Polyolefin Polyethylen ist;
    (b) die physikalische Mischung 1 bis 10 Gew.-% amorphes Polyamid und 0,5 - 10 Gew.-% der Schmelzmischung aus einem Polyamid und einer Komponente auf Vinylalkoholbasis umfaßt; und
    (c) das alkylcarboxyl-substituierte Polyolefin zu etwa 2 - 5 Gew.-% vorliegt.

**17.** Gegenstand nach Anspruch 16, bei welchem das amorphe Polyamid ein Copolymeres von Hexamethylendiamin, Phthalsäure und Terephthalsäure ist, das Polyamid in der Schmelzmischung ein Copolyamid von Adipinsäure, Hexamethylendiamin und Caprolactam ist und die Komponente auf Vinylalkoholbasis Polyvinylalkohol ist.

**18.** Gegenstand nach Anspruch 16, bei welchem das amorphe Amid ein Copolymeres von Hexamethylendiamin, Phthalsäure, Terephthalsäure und bis(p-Aminocyclohexyl)methan ist.

**19.** Verfahren zur Herstellung eines schichtförmigen Gegenstandes, umfassend die Schritte:

(a) Herstellen einer physikalischen Mischung von wenigstens zwei polymeren Materialien, ausgewählt aus der Gruppe bestehend aus Polyamiden, Polyestern, Polycarbonaten, Polyvinylalkohol und Copolymeren von Vinylalkohol und Schmelzmischungen eines Polyamids und einer Komponente auf Vinylalkoholbasis;

(b) Vereinigen der physikalischen Mischung mit einem Polyolefin und einem alkylcarboxyl-substituierten Polyolefin bei einer ausreichenden Temperatur, um alle Komponenten zu schmelzen, wobei eine geschmolzene heterogene Mischung ausgebildet wird;

(c) Formen der geschmolzenen heterogenen Mischung durch (i) Strecken der Mischung zu einem Körper und (ii) Abkühlen des gestreckten Körpers auf unterhalb den Schmelzpunkt der niedrigstschmelzenden Polymerkomponente zur Ausbildung einer Vielzahl von dünnen, im wesentlichen zweidimensionalen, parallelen und überlappenden Schichten.

**20.** Verfahren nach Anspruch 19, bei welchem die polymeren Materialien der physikalischen Mischung mit dem Polyolefin und dem alkylcarboxyl-substituierten Polyolefin vereinigt und anschließend erhitzt werden, um eine geschmolzene heterogene Mischung zu bilden.

**21.** Verfahren nach Anspruch 19, bei welchem Teilchen der physikalischen Mischung und Teilchen des Polyolefins Abmessungen von etwa 1 bis etwa 5 mm aufweisen.

**22.** Verfahren nach Anspruch 20, bei welchem das Strecken zu einer Dehnung des aus der Mischung gebildeten Körpers von wenigstens etwa 100% in wenigstens einer Richtung führt.

**23.** Schichtenförmiger Gegenstand nach Anspruch 2 in Form eines Behälters, welcher vorzugsweise ein Kraftstofftank für Motorfahrzeuge ist.

**24.** Schichtenförmige Struktur, umfassend wenigstens eine erste Schicht aus dem schichtenförmigen Gegenstand nach Anspruch 2 und wenigstens eine zweite Schicht aus einem Polyolefin.

**25.** Schichtenförmige Struktur nach Anspruch 24, bei welcher das Polyolefin der zweiten Schicht das gleiche ist wie das Polyolefin in der ersten Schicht und vorzugsweise Polyethylen ist.

**26.** Schichtenförmige Struktur nach Anspruch 25 in Form eines Behälters, welcher vorzugsweise ein Kraftstofftank für Motorfahrzeuge ist.

**27.** Schichtenförmige Struktur umfassend wenigstens eine erste Schicht aus dem schichtenförmigen Gegenstand nach Anspruch 12 und wenigstens eine zweite Schicht aus einem Polyolefin.

**28.** Zusammensetzung, welche zusammen mit einem Polyolefin zur Herstellung des schichtenförmigen Gegenstandes nach Anspruch 1 geeignet ist, umfassend eine physikalische Mischung aus einem alkylcarboxyl-substituierten Polyolefin und wenigstens zwei polymeren Materialien, ausgewählt aus der Gruppe bestehend aus Polyamiden, Polyestern, Polycarbonaten, Polyvinylalkohol und Schmelzmischungen aus einem Polyamid und einer Komponente auf Vinylalkoholbasis, wobei wenigstens eines der polymeren Materialien ausgewählt ist aus der Gruppe bestehend aus Polyamiden, Polyestern und Polycarbonaten.

**29.** Zusammensetzung, welche für die Herstellung des schichtenförmigen Gegenstandes nach Anspruch 1 geeignet ist, umfassend eine physikalische Mischung aus einem Polyolefin, einem alkylcarboxyl-substituierten Polyolefin und wenigstens zwei polymeren Materialien, ausgewählt aus der Gruppe bestehend aus Polyamiden, Polyestern und Polycarbonaten, Polyvinylalkohol und Schmelzmischungen

20

EP 0 411 601 B1

aus einem Polyamid und einer Komponente auf Vinylalkoholbasis, wobei wenigstens eines der polymeren Materialien ausgewählt ist aus der Gruppe bestehend aus Polyamiden, Polyestern und Polycarbonaten.

30. Zusammensetzung umfassend eine heterogene Schmelzmischung der Zusammensetzung nach Anspruch 29.

**Revendications**

1. Un article laminaire comprenant une combinaison de :
   (a) une polyoléfine ;
   (b) un mélange physique d'au moins deux matières polymères choisies dans le groupe formé par les polyamides, les polyesters, les polycarbonates, l'alcool polyvinylique, les copolymères d'alcool vinylique et les mélanges fondus d'un polyamide et d'un composant à base d'alcool vinylique, dans lequel au moins l'une des matières polymères est choisie dans le groupe formé par les polyamides, les polyesters et les polycarbonates ; et
   (c) une polyoléfine à substitution alkylcarboxyle ;
   dans lequel le mélange (b) est présent dans la polyoléfine (a) sous forme d'une multitude de lamelles minces, sensiblement bidimensionnelles, parallèles et chevauchantes et en outre dans lequel la polyoléfine à substitution alkylcarboxyle est au moins partiellement présente aux interfaces des lamelles de mélange (b) et de la polyoléfine (a).

2. L'article de la revendication 1, dans lequel la polyoléfine (a) est présente en une quantité d'environ 60 à environ 98 pour cent en poids, le mélange (b) est présent en une quantité d'environ 1 à environ 39 pour cent en poids, celui ou ceux qui y sont présents des polyamides, polyesters et polycarbonates étant présents en une quantité totale d'environ 1 à 39 pour cent en poids, et celui ou ceux qui y sont présents de l'alcool polyvinylique, des copolymères d'alcool vinylique et des mélanges fondus étant présents en une quantité totale d'environ 0 à 38 pour cent en poids ; à condition que si l'alcool polyvinylique, les copolymères d'alcool vinylique et les mélanges fondus représentent 0 pour cent en poids, au moins 50 pour cent en poids du mélange physique total consiste en polyamide amorphe ; et à condition que si l'alcool polyvinylique, les copolymères d'alcool vinylique ou les mélanges fondus sont présents, alors

$$\frac{\text{Système II}}{\text{Système I}} \geq 0,1$$

où Système I = polyamides, polyesters et polycarbonates, Système II = alcool polyvinylique, copolymères d'alcool vinylique et mélanges fondus, et la polyoléfine à substitution alkylcarboxyle (c) est présente en une quantité d'environ 0,25 à environ 12 pour cent en poids.

3. L'article de la revendication 2, dans lequel la polyoléfine est du polyéthylène, de préférence du polyéthylène haute densité.

4. L'article de la revendication 2, dans lequel le degré de saponification de l'alcool polyvinylique est d'au moins environ 95 pour cent, de préférence d'au moins environ 99 pour cent.

5. L'article de la revendication 2, dans lequel le composant à base d'alcool vinylique comprend environ 50 à environ 100 pour cent en poids d'un polymère choisi dans le groupe formé par (i) l'alcool polyvinylique, (ii) les copolymères saponifiés d'acétate de vinyle contenant jusqu'à environ 10 pour cent en poids d'un acrylate d'alkyle inférieur ou méthacrylate d'alkyle inférieur, et (iii) leurs mélanges, et environ 0 à environ 50 pour cent en poids d'un copolymère éthylène-alcool vinylique contenant jusqu'à environ 50 pour cent en poids d'éthylène.

6. L'article de la revendication 5, dans lequel le degré de saponification du composant à base d'alcool vinylique est d'au moins environ 95 pour cent, de préférence d'au moins environ 99 pour cent.

21

7. L'article de la revendication 6, dans lequel le composant à base d'alcool vinylique est de l'alcool polyvinylique.

8. L'article de la revendication 2, dans lequel le Système I est un polyamide, de préférence un polyamide amorphe, mieux encore des polyamides qui sont des copolymères d'hexaméthylènediamine, d'acide phtalique et d'acide téréphtalique et notamment de tels copolymères qui comprennent également du bis(*p*-aminocyclohexyl)méthane.

9. L'article de la revendication 2, dans lequel le polyamide du mélange fondu est choisi dans le groupe formé par le polycaproamide et les copolymères d'acide adipique, d'hexaméthylènediamine et de caprolactame, lesdits copolymères étant préférés.

10. L'article de la revendication 2, dans lequel le composant à base d'alcool vinylique est de l'alcool polyvinylique.

11. L'article de la revendication 2, dans lequel la polyoléfine (a) est présente en une quantité d'environ 80 à environ 97 pour cent en poids, de préférence d'environ 85 à environ 96 pour cent en poids, le mélange physique (b) est présent en une quantité d'environ 1,5 à environ 15 pour cent en poids, de préférence d'environ 1,5 à environ 10 pour cent en poids, le Système I étant présent en une quantité totale d'environ 1 à 10 pour cent en poids, de préférence d'environ 1 à 8 pour cent en poids, le Système II étant présent en une quantité totale d'environ 0 à 10 pour cent en poids, de préférence d'environ 0 à 8 pour cent en poids, et le rapport

$$\frac{\text{Système II}}{\text{Système I}}$$

étant compris entre environ 0,1 et 10, et la polyoléfine à substitution alkylcarboxyle (c) est présente en une quantité d'environ 1 à environ 7 pour cent en poids, de préférence d'environ 2 à environ 5 pour cent en poids.

12. L'article de la revendication 2, dans lequel la polyoléfine à substitution alkylcarboxyle est un copolymère de synthèse directe, de préférence un copolymère d'une alpha-oléfine de 2 à 10 atomes de carbone et d'environ 0,25 à environ 25 moles pour cent d'un acide, ester, anhydride ou sel carboxylique éthyléniquement insaturé en alpha,bêta ayant 1 ou 2 fragments carboxyliques, très préférablement un copolymère d'éthylène et d'acide méthacrylique, lequel contient d'une manière préférée environ 1 à environ 10 moles pour cent d'acide méthacrylique, neutralisé à environ 90 pour cent par au moins un ion métallique de valence 1 à 3.

13. L'article de la revendication 2, dans lequel la polyoléfine à substitution alkylcarboxyle est un copolymère greffé, de préférence un copolymère greffé d'environ 0,25 à environ 2,0 pour cent en poids de fragments d'anhydride maléique sur un tronc de polyéthylène.

14. L'article de la revendication 11, dans lequel
(a) la polyoléfine est du polyéthylène ;
(b) le mélange physique comprend environ 1 à 10 pour cent en poids de polyamide semi-cristallin et 0,5 à 10 pour cent en poids du mélange fondu d'un polyamide et d'un composant à base d'alcool vinylique ; et
(c) la polyoléfine à substitution alkylcarboxyle est présente en une quantité d'environ 1 à environ 7 pour cent en poids et est un copolymère greffé d'environ 0,25 à environ 2,0 pour cent en poids de fragments d'anhydride maléique sur un tronc de polyéthylène.

15. L'article de la revendication 14, dans lequel le polyamide semi-cristallin et le polyamide du mélange fondu sont un copolyamide d'acide adipique, d'hexaméthylènediamine et de caprolactame, et le composant à base d'alcool vinylique est de l'alcool polyvinylique.

16. L'article de la revendication 11, dans lequel :
(a) la polyoléfine est du polyéthylène ;

EP 0 411 601 B1

(b) le mélange physique comprend 1 à 10 pour cent en poids de polyamide amorphe et 0,5 à 10 pour cent en poids du mélange fondu d'un polyamide et d'un composant à base d'alcool vinylique ; et

(c) la polyoléfine à substitution alkylcarboxyle est présente en une quantité d'environ 2 à 5 pour cent en poids.

17. L'article de la revendication 16, dans lequel le polyamide amorphe est un copolymère d'hexaméthylènediamine, d'acide phtalique et d'acide téréphtalique, le polyamide du mélange fondu est un copolyamide d'acide adipique, d'hexaméthylènediamine et de caprolactame, et le composant à base d'alcool vinylique est de l'alcool polyvinylique.

18. L'article de la revendication 16, dans lequel le polyamide amorphe est un copolymère d'hexaméthylènediamine, d'acide phtalique, d'acide téréphtalique et de bis(*p*-aminocyclohexyl)méthane.

19. Un procédé de fabrication d'un article stratifié, comprenant les étapes suivantes :

(a) préparer un mélange physique d'au moins deux matières polymères choisies dans le groupe formé par les polyamides, les polyesters, les polycarbonates, l'alcool polyvinylique et les copolymères d'alcool vinylique et les mélanges fondus d'un polyamide et d'un composant à base d'alcool vinylique ;

(b) combiner le mélange physique avec une polyoléfine et une polyoléfine à substitution alkylcarboxyle à une température suffisante pour fondre tous les constituants, pour former ainsi un mélange fondu hétérogène ;

(c) mettre en forme le mélange fondu hétérogène par (i) étirage d'une masse du mélange et (ii) refroidissement de la masse étirée jusqu'au-dessous du point de fusion du constituant polymère ayant le plus bas point de fusion pour former une multitude de lamelles minces, sensiblement bidimensionnelles, parallèles et chevauchantes.

20. Le procédé de la revendication 19, dans lequel les matières polymères du mélange physique sont combinées avec la polyoléfine et la polyoléfine à substitution alkylcarboxyle, ce qui est suivi d'un chauffage pour former un mélange fondu hétérogène.

21. Le procédé de la revendication 19, dans lequel les particules du mélange physique et les particules de la polyoléfine ont des dimensions d'environ 1 à environ 5 mm.

22. Le procédé de la revendication 20, dans lequel l'étirage aboutit à un allongement de la masse du mélange d'au moins environ 100 pour cent dans au moins une direction.

23. L'article laminaire de la revendication 2, sous la forme d'un récipient, qui est de préférence un réservoir à carburant pour véhicules à moteur.

24. Une structure stratifiée comprenant au moins une première couche de l'article laminaire de la revendication 2 et au moins une seconde couche d'une polyoléfine.

25. La structure stratifiée de la revendication 24, dans laquelle la polyoléfine de la seconde couche est la même que la polyoléfine présente dans la première couche et est de préférence du polyéthylène.

26. La structure stratifiée de la revendication 25, sous la forme d'un récipient qui est de préférence un réservoir à carburant pour véhicules à moteur.

27. Une structure stratifiée comprenant au moins une première couche de l'article laminaire de la revendication 12 et au moins une seconde couche d'une polyoléfine.

28. Une composition de matière utilisable avec une polyoléfine dans la fabrication de l'article laminaire de la revendication 1, ladite composition comprenant un mélange physique d'une polyoléfine à substitution alkylcarboxyle et d'au moins deux matières polymères choisies dans le groupe formé par les polyamides, les polyesters et les polycarbonates, l'alcool polyvinylique et les mélanges fondus d'un polyamide et d'un composant à base d'alcool vinylique, au moins l'une des matières polymères étant choisie dans le groupe formé par les polyamides, les polyesters et les polycarbonates.

23

29. Une composition de matière utilisable dans la fabrication de l'article laminaire de la revendication 1, ladite composition comprenant un mélange physique d'une polyoléfine, d'une polyoléfine à substitution alkylcarboxyle et d'au moins deux matières polymères choisies dans le groupe formé par les polyamides, les polyesters et les polycarbonates, l'alcool polyvinylique et les mélanges fondus d'un polyamide et d'un composant à base d'alcool vinylique, au moins l'une des matières polymères étant choisie dans le groupe formé par les polyamides, les polyesters et les polycarbonates.

30. Une composition de matière comprenant un mélange fondu hétérogène de la composition de la revendication 29.